# EUROPÄISCHE PATENTANMELDUNG

(11) **EP 0 844 442 A2**
(43) Veröffentlichungstag der Anmeldung: **27.05.1998**
(21) Anmeldenummer: 97120454.0
(22) Anmeldetag: 21.11.1997
(51) Int. Cl.: F24D 3/14, F16L 3/00

(54) **Verlegevorrichtung für Heizungsrohre od.dgl.**

(30) Priorität: 22.11.1996 DE 29620377 U
(71) Anmelder: Fugo AG, 8274 Tägerwilen (CH)
(72) Erfinder: Fuchs, Martin, 8274 Taegerwilen (CH)
(74) Vertreter: Hiebsch, Gerhard F., Dipl.-Ing.

(57) **Zusammenfassung**

Die Erfindung betrifft eine Verlegevorrichtung für Heizungsrohre od.dgl. Leitungen, mit mindestens einem auf einer Mittelachse (14) einer Trommel (12) aufwickelbaren Trägerstreifen (18), auf welchem eine Mehrzahl von zum Halten eines Heizungsrohres ausgebildeten Befestigungsschellen (24) so in i.w. regelmäßigen Abständen angeordnet ist, daß in einem aufgewickelten Zustand des Trägerstreifens (18) die Befestigungsschellen (24) zur Trommelmitte weisen.

## Beschreibung

Die vorliegende Erfindung betrifft eine Verlegevorrichtung für Heizungsrohre od.dgl. Leitungen sowie einen Trägerstreifen.

Es ist aus dem Stand der Technik bekannt, sich beispielsweise beim Verlegen von Heizungsrohren Befestigungselementen bzw. Befestigungsschellen zu bedienen, welche in vorgewählten Abständen auf einem unterliegenden Rohfußboden befestigt werden und in welche dann geeignet abgelängte und gebogene Heizungsrohre eingesetzt werden, um auf diese Weise für ein späteres Aufbringen des Estrich bzw. einer Fußboden-Deckschicht optimal und sicher geführt zu sein.

Ferner ist es aus dem Stand der Technik, etwa dem deutschen Patent 195 30 367 der Anmelderin, bekannt, derartige Befestigungselemente in regelmäßigen Abständen an einem Endlos-Verbindungssteg anzuordnen, mit welchem der spätere Verlauf der Rohrleitungen markiert werden kann, die Verlegung und Anordnung der Befestigungselemente erleichtert und zugleich eine gute Längenermittlung von benötigtem Heizungsrohr ermöglicht wird.

Bei der Verlegung derartiger, aufgrund der daran bereits vorgesehenen Befestigungselemente zwangsläufig unhandlicher Verbindungsstege ergeben sich jedoch Handhabungsprobleme für einen Benutzer.

Aufgabe der vorliegenden Erfindung ist es daher, eine Verlegevorrichtung für Heizungsrohre od.dgl. Leitungen zu schaffen, womit insbesondere die Voraussetzungen für eine schnelle, problemlose und einfach handhabbare Verlegung von Befestigungselemente aufweisenden Endlosträgern geschaffen werden können.

Ferner ist es Aufgabe der Erfindung, ein Trägerband bzw. einen Befestigungsstreifen zur Verwendung in einer solchen Verlegevorrichtung zu schaffen.

Die Aufgabe wird durch die Verlegevorrichtung mit den Merkmalen des Anspruches 1 sowie den Trägerstreifen mit den Merkmalen des Anspruches 6 gelöst.

Vorteilhaft gestattet dabei die Verlegevorrichtung das einfache, flexible und körperlich wenig belastende Verlegen der Trägerstreifen durch einfaches Abrollen von der Trommel, wobei die Trommel in ihrer Abrollbewegung entlang des jeweils gewünschten Verlegeverlaufs geführt werden kann.

Der Trägerstreifen, für welchen unabhängig Schutz beansprucht wird, ermöglicht in einfach herzustellender und einfach zu verlegender Weise das Anbringen von Halteelementen für das Heizungsrohr auf einem unterliegenden Rohfußboden dergestalt, daß der Verbindungsstreifen, mit seinen regelmäßig beabstandeten Durchbrüchen, Halterung und gleichzeitig Längenmaß für den durch die Halteelemente definierten Rohrverlauf des Heizungsrohres ist. Dabei ist der Verbindungsstreifen in jeweils geeignet auswählender Weise über eine Klebverbindung und/oder andere Verankerungsmethoden auf bzw. in dem unterliegenden Fußboden festzulegen.

Vorteilhafte Weiterbildungen der Erfindung sind in den Unteransprüchen beschrieben.

So ist es besonders bevorzugt, ein jeweiliges Halteelement mittels eines gesonderten, bodenseitig durch den Verbindungsstreifen führbaren Kupplungsstücks auf dem Verbindungsstreifen zu befestigen; gleichzeitig kann eine Unterfläche des Kupplungsstücks selbst als Klebefläche für einen Boden Halt dienen.

Weitere Vorteile, Merkmale und Einzelheiten der Erfindung ergeben sich aus der nachfolgenden Beschreibung von Ausführungsbeispielen sowie anhand der Zeichnungen; diese zeigen in
- Fig. 1:: eine geschnittene Seitenansicht der erfindungsgemäßen Verlegevorrichtung für Heizungsrohre od.dgl. Leitungen gemäß einer ersten, bevorzugten Ausführungsform bei teilweise abgerolltem Befestigungsstreifen;
- Fig. 2:: eine Frontansicht auf die Verlegevorrichtung der Fig. 1 mit den benachbarten Lagen aufgerollter Befestigungsstreifen;
- Fig. 3:: eine Schnittansicht einer möglichen konkreten Ausbildung eines Befestigungsstreifens zur Verwendung in der Vorrichtung nach Fig. 1 und 2;
- Fig. 4:: eine alternative Ausführungsform eines Befestigungsstreifens gemäß Fig. 3;
- Fig. 5:: eine Draufsicht auf Befestigungselemente des Befestigungsstreifens der Fig. 3 bzw. 4;
- Fig. 6:: eine Schnittansicht durch einen Befestigungsstreifen, der mit einer oberen Isolierlage versehen ist;
- Fig. 7:: eine Schnittansicht durch den Befestigungsstreifen gemäß Fig. 4, der in einen Isolierstreifen eingesteckt ist;
- Fig. 8:: eine Schnittansicht einer alternativen Ausführungsform eines Isolierstreifens;
- Fig. 9:: eine Längsansicht der Befestigungsstreifenanordnung gemäß Fig. 3;
- Fig. 10:: eine geschnittene Längsansicht der Befestigungsstreifenanordnung gemäß Fig. 4 bzw. Fig. 7 und
- Fig. 11:: Ansichten einer weiteren, alternativen Ausführungsform eines Befestigungsstreifens.

Es hat sich bei der Realisierung der Erfindung herausgestellt, daß insbesondere eine abrollende Endlosverlegung bzw. -verarbeitung eines Befestigungsstreifens zum Festlegen der Heizungsrohre oder von anderen Leitungen auf einem unterliegenden Rohfußboden 10 besonders effizient und ökonomisch ist.

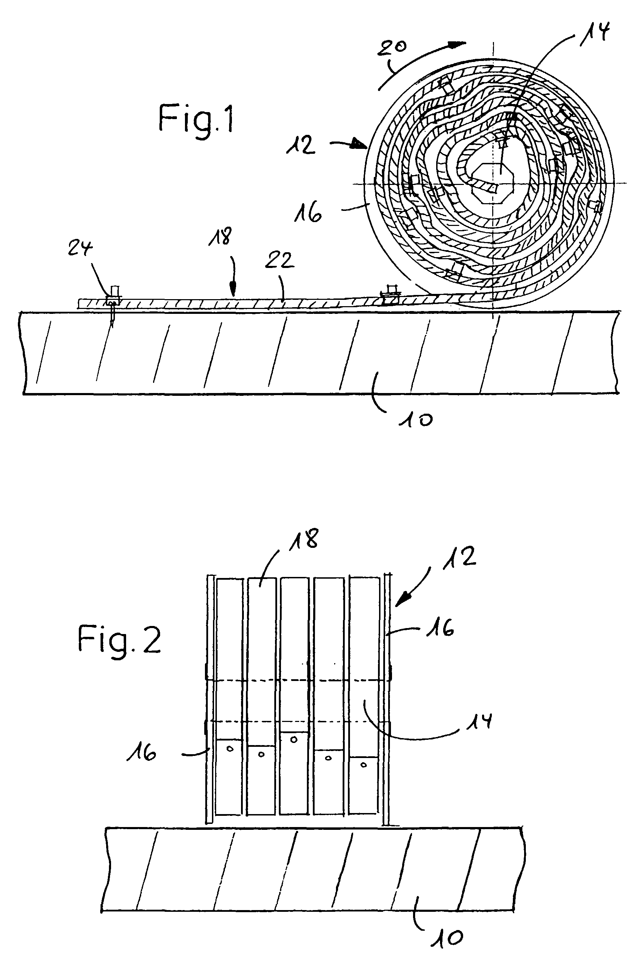

Aus diesem Grunde weist die erfindungsgemäße Verlegevorrichtung eine Abrolltrommel 12 aus, welche beidseitig eines im Querschnitt sechs- oder achteckigen Mittelstücks 14 (Achse) i.w. kreisförmige Seitenwangen 16 aufweist, welche sich in Umfangsrichtung über die auf das Mittelstück 14 aufgerollten, einander benachbarten Lagen von Befestigungsstreifen 18 erstrecken, so daß die Trommel 12 in der in Fig. 1 gezeigten Weise in Pfeilrichtung 20 zum Abrollen eines jeweiligen Befestigungsstreifens 18 bewegbar ist.

Ein jeweiliger Befestigungsstreifen 18 besteht dabei aus einem durchgehenden, streifenförmigen Trägerband 22, welches -- wie im dargestellten Ausführungsbeispiel der Fig. 1 -- aus einem eine vorbestimmte Dicke aufweisenden Isoliermaterial bestehen kann, alternativ aber auch einen dünnen Streifen aus Kunststoff, Pappe od.dgl. besitzen kann.

An diesem Trägerband 22 sind in regelmäßigen Abständen Befestigungs- bzw. Halteschellen 24 befestigt bzw. befestigbar, so daß mit dem Abrollen eines jeweiligen Befestigungsstreifens 18 das Trägerband 22 auf dem Rohfußboden 10 in einem gewünschten Verlauf aufliegt und die Befestigungs- bzw. Halteschellen 24 durch ihre regelmäßigen Abstände eine Gesamtlänge des verlegten Befestigungsstreifens 18 markieren.

Wie in der Fig. 1 gezeigt, sind die jeweiligen Schellen 24 Bestandteil des aufgewickelten Befestigungsstreifens und komprimieren insbesondere bei Verwendung von elastischem Isoliermaterial als Trägerband dieses punktuell auf der Rolle.

Im abgerollten Zustand wird dann der Befestigungsstreifen mit dem unterliegenden Rohfußboden entweder durch eine --am Trägerband 22 durchgehend oder an den Schellen 24 punktuell angreifende -- Klebverbindung befestigt, oder aber es wird, wie in der Fig. 1, links gezeigt, eine jeweilige Halteschelle mittels eines Schießbolzens, einer Schraube od.dgl. Haltemittel auf dem Rohfußboden festgelegt.

Wie in Fig. 2 gezeigt, ist es besonders bevorzugt, die Trommel 12 mit einer Mehrzahl von nebeneinanderliegenden, aufgerollten Befestigungsstreifen 18 zu versehen, damit zum einen eine verlegbare Länge für den praktischen Betrieb vergrößert werden kann, und zum anderen eine Gesamtbreite der Trommel erreicht wird, welche ein stabiles Abrollen bei einfacher Handhabung für eine Bedienperson gewährleistet.

Während das oben beschriebene Ausführungsbeispiel eine Verlegevorrichtung mit Isolierstreifen aufweisenden Befestigungsstreifen vorsieht, liegt es im Umfang der Erfindung, die erfindungsgemäße Verlegevorrichtung mit beliebigen, kontinuierlichen Halte- bzw. Befestigungsmitteln für Heizungsrohre od.dgl. Leitungen zu versehen. Diesbezüglich sei auf die im deutschen Patent 195 30 367 der Anmelderin beschriebenen verschiedenen Ausbildungen endloser Befestigungsstreifen und/oder von Halteschellen verwiesen, die mit ihren konkreten Ausbildungen in den Offenbarungsgehalt der vorliegenden Beschreibung einbezogen gelten sollen; entsprechendes gilt für die deutsche Zusatzpatentanmeldung 196 12 789 der Anmelderin.

In einer (in den Fig. nicht gezeigten) Weiterbildung des in Fig. 1 und Fig. 2 gezeigten Ausführungsbeispiels ist zusätzlich ein Stabilisierungs- bzw. Arretierungselement in Form mindestens eines parallel zu den Seitenwangen 16 auf der Achse 14 sitzenden Scheibenelements vorgesehen. Eine derartige Scheibe, die bevorzugt aus Karton od.dgl. hergestellt ist, könnte etwa bei teilweise abgewickelter Trommel -- einige der in Fig. 2 gezeigten Befestigungsstreifen 18 sind bereits vollständig abgewickelt -- verschiebbar auf der Achse 14 sitzen und für einen seitlichen Halt bzw. eine seitliche Begrenzung der verbleibenden, aufgerollten Befestigungsstreifen sorgen. Insbsondere für den Transport einer solchen, teilweise benutzten Rolle sind dadurch beträchtliche Vorteile erreichbar.

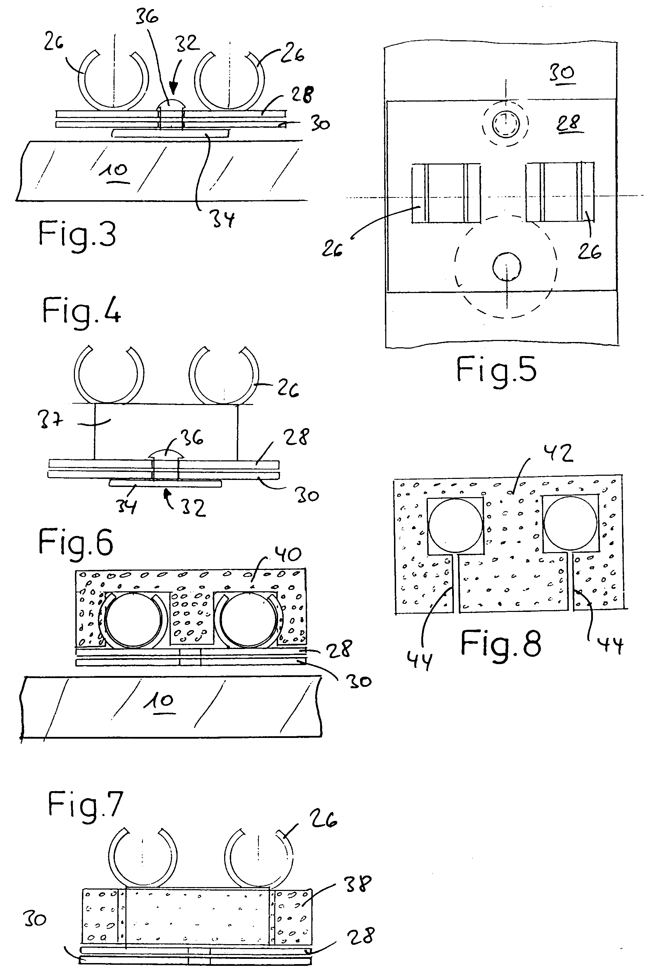

Im weiteren werden unter Bezug auf die Fig. 3 bis 11 weitere, konkrete Ausführungsbeispiele für Befestigungsstreifen beschrieben, welche insbesondere auch für eine Verwendung im Zusammenhang mit der erfindungsgemäßen Verlegevorrichtung der Fig. 1 und 2 geeignet sind.

So zeigt die Fig. 3 im Querschnitt ein Befestigungselement 24, bestehend aus einem Paar von Halteklammern 26 auf einer Grund- bzw. Druckplatte 28.

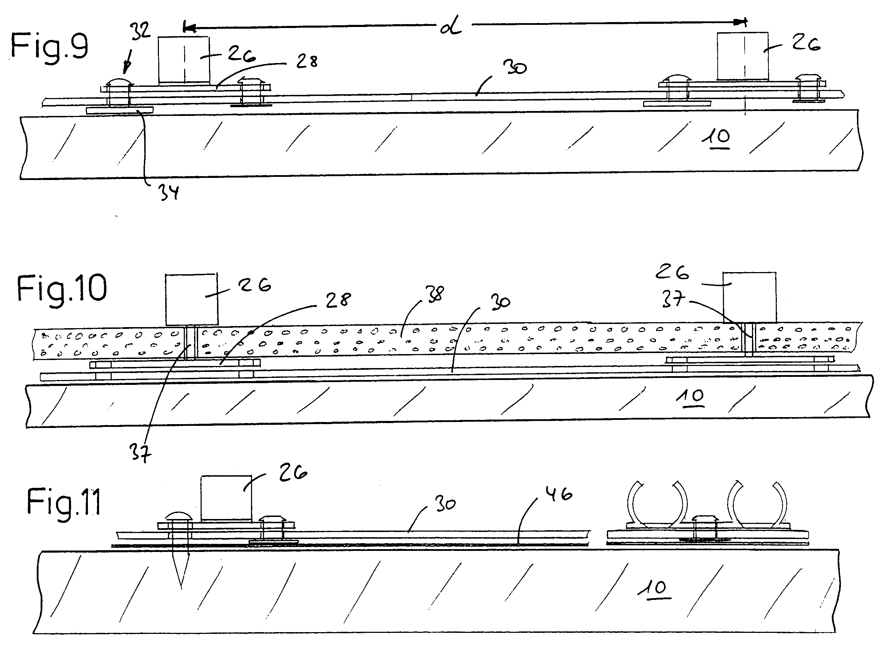

Unterhalb dieser Anordnung, die in der Fig. 5 in der Draufsicht gezeigt ist, verläuft in Längsrichtung von in die Halteklammern 26 einzuführenden Rohrleitungen ein Träger- bzw. Verbindungsstreifen 30, an welchem in vorbestimmten Abständen d (vgl. Fig. 9) die Befestigungselemente 24 mittels eines Verankerungselements 32 befestigt sind.

Dieses Verankerungselement besteht im dargestellten Ausführungsbeispiel der Fig. 3 bzw. 9 aus einem tellerförmigen Bodenabschnitt 34, von welchem sich aufwärts -- durch den Verbindungsstreifen 30 bzw. die Druckplatte 28 hindurch --ein nietartiger Ansatz 36 erstreckt. Auf diese Weise wird dann nicht nur das Befestigungselement 24 auf dem Verbindungsstreifen 30 befestigt; gleichzeitig dient die bodenseitige Oberfläche des Bodenabschnitts 34 des Verankerungselements 32 zum Aufbringen von Klebstoff od.dgl. zur Verbindung mit dem unterliegenden Rohfußboden 10.

Aus der Draufsicht der Fig. 5 ergibt sich schematisch angedeutet die Anordnung des Verankerungselements 32; darüber hinaus ist in der Grundplatte 28 eine weitere Bohrung zum Einsetzen eines Schießbolzens od.dgl. gebildet.

Besonders bevorzugt ist es auch möglich, bodenseitig den Bodenabschnitt 24 mit einem auf Erwärmung reagierenden Kleber bzw. einer Bitumenmasse zu versehen: Somit wird lediglich beim Aufsetzen auf den Rohfußboden 10 noch keine Klebewirkung erzielt; hierfür müßte dann auf die Grundplatte 28 oberhalb des Verankerungselements 32 eine Wärmequelle, etwa ein elektrisch beheiztes oder ein auf der Basis von hochfrequenten, elektromagnetischen Wellen (Mikrowellen) wirksames Werkzeug, aufgesetzt werden, und dadurch würde dann am Bodenabschnitt sitzender Kleber verflüssigt und in Klebekontakt mit dem Rohfußboden 10 gebracht.

Fig. 4 zeigt eine Weiterbildung der Ausführungsform gemäß Fig. 3: Während -- etwa bei Anwendungsfällen, die keiner besonderen Isolierung bedürfen -- die Druckplatte des Befestigungselements 24 unmittelbar auf dem dünnen Verbindungsstreifen (der besonders bevorzugt aus PE oder einem vergleichbaren Kunststoff gefertigt ist) aufliegt und die Halteklammern 26 unmittelbar auf der Grundplatte 28 befestigt sind, sieht die alternative Ausbildung der Fig. 4 vor, die Halteklammern 26 auf einem Vertikalsteg auszubilden, der die Klammern in einem vorbestimmten Abstand zur Grundplatte 28 bringt. Bevorzugt ist zudem der Vertikalsteg -- einstückig mit den Elementen 26 bzw. 28 ausgebildet -- als sich in einer Querrichtung bezogen auf die Verlegung der Heizungsrohre konstruktiv realisiert.

Die Seitenansicht der Fig. 10 bzw. die Ansicht der Fig. 7 zeigt -- zusätzlich mit einem eingepaßten Isolierstreifen 38 -- die Anordnung dieses Vertikalstegs 37. In besonders geeigneter Weise ist der Isolierstreifen 38, dessen Höhe i.w. der des Vertikalsteges 37 entspricht, mit entsprechenden, quer verlaufenden Schlitzen bzw. Durchbrüchen versehen, welch ein Hindurchführen der Klammerabschnitte 26 zur Montage gestatten.

Die Fig. 6 zeigt eine Weiterbildung der oben beschriebenen Ausführungsformen für einen Einsatzzweck, bei welchem zusätzlich eine obere Isolierung der in den Halteklammern 26 geführten Heizungsrohre notwendig ist: Ein Isolierstreifen 40 weist diesbezüglich entsprechende Längsnuten zum Einpassen der in den Klammern 26 geführten Heizungsrohre auf, bietet ansonsten aber eine seitliche und obere Trittschal- bzw. Wärmeisolierung der Heizungsrohre. Ein solcher Isolierstreifen wäre sowohl mit den Ausbildungen der Fig. 3/9 als auch der Fig. 4/7/10 verwendbar.

Fig. 8 zeigt eine Lösungsalternative zum Isolieren der in den vorstehend beschriebenen Anordnungen geführten Heizungsrohre: Ein Isolierstreifen 42 weist -- ähnlich der Fig. 6 -- einen oberen Bereich mit Längsnuten zum Aufnehmen der Rohre auf; zusätzlich jedoch einen unteren Abschnitt, der mit Längsschlitzen 44 zum Aufstecken auf eine Anordnung mit Vertikalsteg gemäß Fig. 4/7/10 geeignet ist (dafür weist dann der Isolierstreifen 42 ebenfalls geeignete, nicht gezeigte Querschlitze auf.

Schließlich verdeutlicht die kombinierte Seiten- und Frontalansicht der Fig. 11, wie -- zur alternativen Befestigung einer der vorstehend beschriebenen Ausbildungen -- die gesamte Anordnung mit einer unterliegenden, doppelseitigen Klebeschicht 46 (etwa aus bekanntem Doppelklebeband, aus einer bituminösen Schicht od.dgl.) versehen sein kann, die bei geeignetem Rohfußboden 10 optimale Hafteigenschaften sichert und gleichzeitig das einfache und sichere Anbringen ermöglicht.

Die Erfindung ist nicht auf die oben beschriebenen Ausführungsbeispiele beschränkt. So ist es insbesondere von der Erfindung umfaßt, auch andere, nicht in den Fig. konkret beschriebene Merkmale und Ausbildungen in abweichender Weise miteinander zu kombinieren und einem jeweiligen Anwendungsfall anzupassen.

Dabei hat es sich auch als besonders günstig erwiesen, etwa die Befestigungselemente 24 und/oder einen Trägerstreifen 30 aus rezykliertem Plastik- oder Kunststoffmaterial zu fertigen und/oder in geeigneter Weise mit einer Signalfarbe zur besseren Erkennbarkeit einzufärben.

## Patentansprüche

1. Verlegevorrichtung für Heizungsrohre od.dgl. Leitungen, mit mindestens einem auf einer Mittelachse (14) einer Trommel (12) aufwickelbaren Trägerstreifen (18), auf welchem eine Mehrzahl von zum Halten eines Heizungsrohres ausgebildeten Befestigungsschellen (24) so in i.w. regelmäßigen Abständen angeordnet ist, daß in einem aufgewickelten Zustand des Trägerstreifens (18) die Befestigungsschellen (24) zur Trommelmitte weisen.

2. Verlegevorrichtung nach Anspruch 1, dadurch gekennzeichnet, daß die Trommel (12) ein Paar von beidseits der Mittelachse (14) vorgesehenen, i.w. kreisförmigen Endstücken (16) aufweist, die in dem aufgewickelten Zustand des Trägerstreifens (18) diesen seitlich begrenzen und so ausgebildet sind, daß ein Abrollen der Trommel (12) auf dem Paar von Endstücken (16) ermöglicht ist.

3. Vorrichtung nach Anspruch 1 oder 2, dadurch gekennzeichnet, daß die Trommel zum nebeneinanderliegenden Aufwickeln einer Mehrzahl von Trägerstreifen (18) vorgesehen ist, die getrennt voneinander abwickelbar auf der Trommel gehalten sind.

4. Vorrichtung nach Anspruch 3, dadurch gekennzeichnet, daß die Trommel zwischen drei und acht in einem aufgewickelten Zustand nebeneinanderliegende Trägerstreifen (18) aufweist.

5. Vorrichtung nach einem der Ansprüche 1 bis 4, dadurch gekennzeichnet, daß der Trägerstreifen (18) eine Breite zwischen 4 und 12 cm und eine Dicke zwischen 0,3 und 40 mm aufweist.

6. Trägerstreifen für ein Heizungsrohr od.dgl. insbesondere zur Verwendung in der Verlegevorrichtung nach einem der Ansprüche 1 bis 5, mit einem Verbindungsstreifen (30) aus einem Plastikmaterial und mindestens einem auf dem Verbindungsstreifen (30) befestigbaren Halteelement (24) für das Heizungsrohr, dadurch gekennzeichnet, daß das Halteelement (24) mittels eines eine Schnappverbindung mit dem Halteelement herstellenden Kupplungsstück (34) in einem Durchbruch im Verbindungsstreifen (22) festlegbar ausgebildet ist und der Verbindungsstreifen (22) in einer Verlegerichtung des Heizungsrohres eine Mehrzahl der Durchbrüche aufweist, die zueinander einen i.w. konstanten Abstand besitzen.

7. Trägerstreifen nach Anspruch 6, dadurch gekennzeichnet, daß das Kupplungsstück zur Montage des Trägerstreifens (30) auf einem unterliegenden Rohfußboden (10) befestigbar ausgebildet ist und einen Schnappabschnitt (36) zum Hindurchgreifen durch den Verbindungsstreifen (30) aufweist, wobei das Halteelement (24) zum Aufsetzen auf den Schnappabschnitt (36) ausgebildet ist.

8. Trägerstreifen nach Anspruch 7, dadurch gekennzeichnet, daß das Kupplungsstück eine i.w. plane Bodenfläche (34) aufweist, die zum bodenseitigen Beaufschlagen mit einem Klebemittel zum Festlegen auf dem Rohfußboden (10) eingerichtet ist.

9. Trägerstreifen nach Anspruch 8, dadurch gekennzeichnet, daß das Klebemittel durch Erwärmung zum Herbeiführen einer Klebewirkung aktivierbar eingerichtet ist und das Halteelement (24) zum Aufsetzen eines Heizwerkzeuges zum Erwärmen des Klebemittels ausgebildet ist.
